# FASCICULE DE BREVET EUROPEEN

(11) **EP 3 140 961 B1**
(45) Date de publication et mention de la délivrance du brevet: **06.11.2019**
(21) Numéro de dépôt: 15725723.9
(22) Date de dépôt: 09.04.2015
(51) Int. Cl.: H04L 12/28

(54) **PROCÉDÉ OPTIMISÉ DE RÉGULATION DE LA CONSOMMATION ÉLECTRIQUE D'ÉQUIPEMENTS ÉLECTRIQUES**
OPTIMIERTES VERFAHREN ZUR REGULIERUNG DES STROMVERBRAUCHS VON ELEKTRISCHEN EINHEITEN
OPTIMISED METHOD FOR REGULATING THE ELECTRICAL CONSUMPTION OF ELECTRICAL UNITS

(30) Priorité: 05.05.2014 FR 1454055
(43) Date de publication de la demande: 15.03.2017
(73) Titulaire: Société Muller & Cie, 75018 Paris (FR)
(72) Inventeur: LEMAIRE, Philippe, 75018 Paris (FR); MORARD, Jean-Louis, 75018 Paris (FR); POURRAT, François, F-75018 Paris (FR)
(74) Mandataire: Lavoix
(86) Numéro de dépôt international: PCT/FR2015/050946
(87) Numéro de publication internationale: WO 2015/170022

(56) Documents cités:
- US-A1- 2007 043 803
- US-A1- 2012 158 161
- US-A1- 2013 147 623

## Description

La présente invention concerne le domaine des communications entre des équipements et un gestionnaire d'énergie en charge de réguler la consommation électrique d'équipements électriques d'un logement par exemple.

A titre d'exemple, les équipements communiquant avec le gestionnaire d'énergie peuvent être des radiateurs de chauffage, des unités réversibles de chauffage/climatisation, des unités de production d'Eau Chaude Sanitaire (ECS) thermodynamique à accumulation, des unités de ventilation individuelles ou divers capteurs autonomes de température, d'hygrométrie, de luminosité, d'absence/présence d'un utilisateur, de contact de feuillure ou de mouvements. De tels capteurs peuvent par exemple être disposés dans une même pièce d'un logement comportant des fenêtres.

Les capteurs peuvent en outre être intégrés dans des équipements électriques. Par exemple, un radiateur de chauffage peut intégrer un capteur de température, ou une unité de ventilation peut comprendre un contact de feuillure pour déterminer si une fenêtre est ouverte ou non.

Les informations captées peuvent ainsi être remontées à un gestionnaire d'énergie en charge de réguler la consommation électrique d'un ensemble d'équipements électriques au moyen de consignes de régulation. Ainsi, si un capteur remonte l'information selon laquelle une fenêtre est ouverte dans une pièce donnée, le gestionnaire d'énergie peut envoyer une consigne de coupure d'un radiateur de chauffage de la pièce donnée.

Le document US2012/158161 divulgue un système de type SMA dans un réseau domotique en charge de dispositifs SMA tels que des capteurs. Le document US2007/043803 décrit un système où des utilisateurs souhaitent accéder à des informations de capteurs contradictoires.

Toutefois, le gestionnaire d'énergie ne dispose pas, lors de la réception des informations captées, du degré de précision ou du niveau de qualité avec lequel ont été captées ces informations.

De plus, différents capteurs peuvent remonter des informations contradictoires au gestionnaire d'énergie qui n'a alors pas la capacité de déterminer quelle information doit être prise en compte pour générer une consigne de régulation appropriée.

Ainsi, il existe un besoin d'améliorer la fiabilité des informations remontées par des capteurs à un gestionnaire d'énergie, afin de permettre la transmission de consignes adaptées à des équipements électriques d'un logement.

La présente invention vient améliorer la situation.

Un premier aspect de l'invention concerne un procédé selon la revendication 1. Sur réception d'un premier message et d'un deuxième message issus respectivement d'un premier capteur et d'un deuxième capteur, comprenant des informations captées contradictoires, le procédé peut comprendre en outre la sélection de l'un des messages sur la base du type du premier capteur et du type du deuxième capteur, la consigne de régulation étant mise à jour en fonction de l'information captée par le capteur sélectionné.

Ainsi, l'indication du type de capteur permet au gestionnaire d'énergie de régler des conflits dans lesquels des informations contradictoires sont reçues de capteurs différents. A cet effet, un ensemble de règles prédéterminées peut être prévu afin de sélectionner l'un des messages reçu. Aucune restriction n'est attachée à la manière dont l'un des messages reçus est sélectionné.

En complément, le gestionnaire d'énergie peut stocker en correspondance des types de capteurs avec des niveaux de qualités respectifs, et, en cas de réception d'informations contradictoires, le message sélectionné peut être le message identifiant le type de capteur associé au niveau de qualité de plus élevé.

Selon un mode de réalisation, l'information captée par le capteur peut être une mesure de température.

Dans une réalisation de l'invention, le gestionnaire d'énergie peut stocker en correspondance des types de capteurs avec des coefficients de pondération respectifs, un premier message issu d'un premier capteur peut être reçu, le premier message comprenant une première valeur de température captée par le premier capteur et le premier message identifiant un type du premier capteur. Au moins un deuxième message issu d'un deuxième capteur peut en outre être reçu, le deuxième message comprenant une deuxième valeur de température captée par le deuxième capteur et le deuxième message comprenant identifiant un type du deuxième capteur et la consigne de régulation peut être mise à jour en fonction d'une pondération des premières et deuxième valeurs de température par les coefficients de pondération respectivement associés aux types des premier et deuxième capteurs.

Ce mode de réalisation permet d'optimiser une valeur de température prise en compte pour la génération d'une consigne de régulation, ce qui est particulièrement avantageux pour commander des équipements électriques tels que des unités de ventilation ou de chauffage. En outre, si les capteurs sont compris dans les équipements électriques précités, différents coefficients de pondération peuvent être prévus en fonction de régimes de fonctionnement courants de ces équipements électriques.

Dans un mode de réalisation de l'invention, l'information captée par le capteur est information de détection de présence d'un utilisateur.

Un tel mode de réalisation permet d'optimiser la consommation électrique des équipements électriques d'un logement, en limitant notamment la consommation lorsque l'utilisateur est absent.

Un mode de réalisation de l'invention peut prévoir que le message comprend un champ d'en-tête, le champ d'en-tête identifiant le type de capteur.

En complément, l'information captée par le capteur peut être cryptée dans le message en fonction du type de capteur, procédé comprenant en outre une étape de décryptage par le gestionnaire d'énergie du message reçu à partir du type de capteur identifié dans le champ d'en-tête.

Un tel mode de réalisation permet de sécuriser les échanges entre les capteurs et le gestionnaire d'énergie, tout en assurant que le gestionnaire d'énergie a la possibilité de décrypter les données utiles en accédant au type de capteur dans le champ d'en-tête, qui n'est pas crypté.

Un deuxième aspect de l'invention concerne un programme d'ordinateur comportant des instructions pour la mise en œuvre du procédé selon le premier aspect de l'invention, lorsque ce programme est exécuté par un processeur.

Un troisième aspect de l'invention concerne un gestionnaire d'énergie selon la revendication 9.

Un quatrième aspect de l'invention concerne un programme d'ordinateur comportant des instructions pour la mise en œuvre du procédé selon le quatrième aspect de l'invention, lorsque ce programme est exécuté par un processeur.

Un cinquième aspect de l'invention concerne un capteur apte à communiquer avec un gestionnaire d'énergie en charge de la régulation de la consommation électrique d'un ensemble d'équipements électriques selon le troisième aspect de l'invention, le capteur comprenant les caractéristiques de la revendication 9.

Un sixième aspect de l'invention concerne un système de régulation de la consommation électrique d'un ensemble d'équipements électriques comprenant un gestionnaire d'énergie selon le troisième aspect de l'invention et au moins un capteur selon le sixième aspect de l'invention.

D'autres caractéristiques et avantages de l'invention apparaîtront à l'examen de la description détaillée ci-après, et des dessins annexés sur lesquels:
- la figure 1 présente un système de régulation de la consommation électrique d'un ensemble d'équipements électriques comprenant un gestionnaire d'énergie selon l'invention ;
- la figure 2 est un diagramme illustrant les étapes d'un procédé de transmission d'un message à un gestionnaire d'énergie selon un mode de réalisation de l'invention;

- la figure 3 représente la structure d'un capteur selon un mode de réalisation de l'invention ;
- la figure 4 est un diagramme illustrant les étapes d'un procédé de traitement de données selon un mode de réalisation de l'invention ;
- la figure 5 illustre la structure d'un gestionnaire d'énergie selon un mode de réalisation de l'invention.

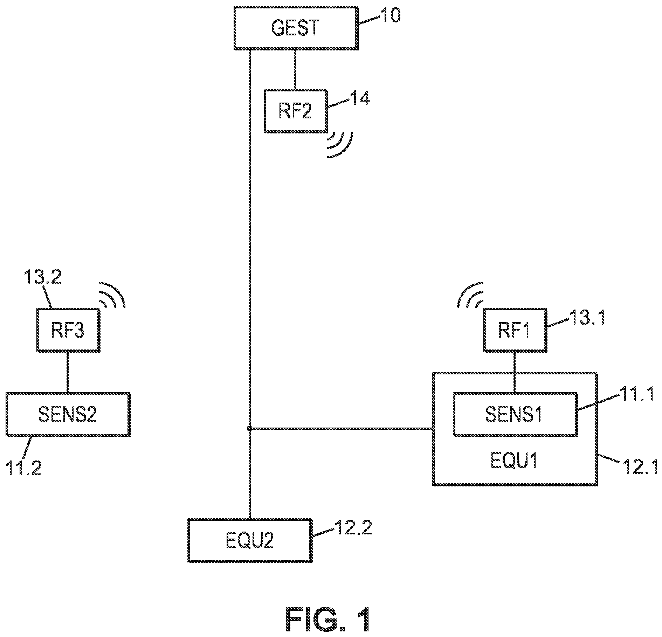

La figure 1 présente un système de régulation de la consommation électrique d'un ensemble d'équipements électriques 12.1 et 12.2, selon un mode de réalisation de l'invention.

Le système comprend un gestionnaire d'énergie 10 apte à communiquer avec un premier capteur 11.1 et un deuxième capteur 11.2, par voie radiofréquence. A cet effet, le gestionnaire d'énergie 10 est relié à un module de communication maître 14, le premier capteur 11.1 est relié à un premier module de communication 13.1 et le deuxième capteur 11.2 est relié à un deuxième module de communication 13.2.

Les modules de communication 13.1 et 13.2 sont aptes à échanger des données avec le module de communication maître 14 par voie radiofréquences, par exemple via un protocole bidirectionnel et via une liaison sans fil 868 MHz ou 2,4GHz.

Le module de communication maître 14 peut intégrer un point de connexion IP (pour « Internet Protocol » en anglais), et les premier et deuxième capteurs 11.1 et 11.2 peuvent ainsi communiquer par voie IP avec le gestionnaire d'énergie 10.

Aucune restriction n'est attachée aux interfaces de communication entre le gestionnaire d'énergie 10 et les premier et deuxième capteurs 11.1 et 11.2, qui peuvent, à titre alternatif, être reliés par voie filaire.

Un système comprenant deux capteurs 11.1 et 11.2 a été représenté à titre illustratif. Toutefois, aucune restriction n'est attachée au nombre de capteurs du système, qui peut comprendre un unique capteur ou plus de deux capteurs.

Aucune restriction n'est attachée aux capteurs considérés, qui peuvent être des capteurs de température, d'hygrométrie, de luminosité, d'absence/présence d'un utilisateur, de contact de feuillure ou de mouvements.

Le premier capteur 11.1 est compris dans un premier équipement électrique 12.1 dont la consommation électrique est régulée par le gestionnaire d'énergie 10.

Le système comprend en outre un deuxième équipement électrique 12.2 dont la consommation électrique est également régulée par le gestionnaire d'énergie 10.

A cet effet, les premier et deuxième équipements électriques 12.1 et 12.2 peuvent être reliés au gestionnaire d'énergie 10 par l'intermédiaire d'une liaison filaire, par exemple un fil pilote bidirectionnel apte à transporter des consignes de régulation comprenant des ordres, pouvant être choisis parmi un ensemble prédéterminé d'ordres (par exemple 6 ordres : confort, confort -1°C, confort -2°C, économique, hors-gel, arrêt). En variante, les consignes de régulation peuvent être communiquées par voie radiofréquences, et l'invention n'est ainsi aucunement restreinte à une communication filaire entre le gestionnaire d'énergie 10 et les équipements électriques 12.1 et 12.2. Dans une autre variante, le gestionnaire d'énergie 10 peut être intégré au module de communication maître, l'ensemble pouvant éventuellement être intégré dans un des équipements électriques considérés.

Aucune restriction n'est attachée aux équipements électriques considérés. Ils peuvent par exemple être des radiateurs de chauffage, des unités réversibles de chauffage/climatisation, des unités de production d'Eau Chaude Sanitaire (ECS) thermodynamique à accumulation, ou des unités de ventilation individuelles. Aucune restriction n'est par ailleurs attachée au nombre d'équipements électriques du système. On peut prévoir un système comprenant un unique équipement électrique, ou comprenant plus de deux équipements électriques.

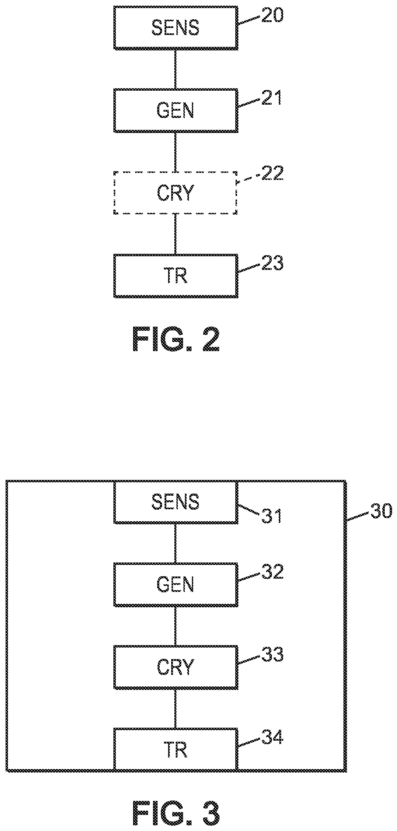

La Figure 3 est un diagramme illustrant les étapes d'un procédé de transmission d'un message au gestionnaire d'énergie 10, mis en œuvre par chacun des premier et deuxième capteurs 11.1 et 11.2, selon un mode de réalisation de l'invention.

A une étape 20, des informations dans l'environnement du capteur sont captées. Les informations captées dépendent de la nature et du type de capteur. Il peut par exemple s'agir de la température instantanée dans l'environnement du capteur, ou en variante, d'une température moyennée sur un intervalle temporel donné.

Les informations captées peuvent en outre être liées à la présence ou à l'absence d'un utilisateur dans une pièce dans laquelle est placé le capteur.

Par exemple, le premier capteur 11.1 peut être compris dans un radiateur (premier équipement électrique 12.1), et détermine que l'utilisateur est absent lorsqu'aucun mouvement n'est détecté sur une période donnée, de trente minutes par exemple. A l'issue des trente minutes, une information est acquise (dans ce cas, l'absence d'utilisateur dans la pièce dans laquelle se situe le radiateur 12.1). Selon le même exemple, le deuxième capteur 12.1 peut être un capteur de mouvement mural qui transmet une information d'absence ou de présence de manière instantanée. Par exemple, le deuxième capteur 12.1 détermine si, à un instant t, un utilisateur est présent ou non. Des informations instantanées peuvent par exemple être remontées à intervalles réguliers vers le gestionnaire d'énergie 10.

Ainsi, les informations recueillies par les différents capteurs du système peuvent diverger.

Tel peut être également le cas lorsque les premier et deuxième capteurs 11.1 et 11.2 sont aptes à détecter ou non l'ouverture d'une fenêtre. A cet effet, le capteur 11.1 peut être un capteur de température d'un radiateur (premier équipement électrique 12.1), qui détecte une chute brutale de la température mesurée, sur un intervalle temporel de quelques minutes, qui est interprétée comme l'ouverture d'une fenêtre. Le deuxième capteur 11.2 peut alors être un contact de feuillure, apte à capter instantanément l'information de l'ouverture de la fenêtre. L'information d'ouverture de fenêtre du contact de feuillure peut être considérée comme de meilleure qualité, dans la mesure où une chute brutale de température sur une période donnée peut être causée par un événement autre que l'ouverture d'une fenêtre.

Selon un autre exemple, le premier capteur 11.1 peut être une sonde de température d'une unité de ventilation (premier équipement électrique 12.1) placée dans un canal d'extraction d'air et apte à mesure la température d'air ambiant dans ce canal. L'information de température captée par la sonde de température 11.1 est différente d'une information de température captée par le deuxième capteur 11.2 qui peut être un capteur de température mural placé à proximité d'une porte d'entrée, par exemple.

A une étape 21, le capteur génère un message à partir des informations captées. Le message identifie en outre un type de capteur. On entend par type de capteur, toute information représentative de la nature et de la qualité de l'information qui est captée par le capteur en question. On distingue ainsi les types « capteur de température », « capteur d'hygrométrie », « capteur de mouvement », « capteur de luminosité », « capteur de vitesse d'air ».

Le type de capteur peut également identifier l'équipement comprenant le capteur (dans le cas du premier capteur 11.1 par exemple, compris dans l'équipement électrique 12.1). Dans ce cas, on peut distinguer les types de capteur suivants « radiateur de chauffage », « climatiseur réversible », « unité local de ventilation », « production ECS thermodynamique à accumulation ».

Le type de capteur peut en outre identifier la localisation du capteur dans le logement (capteur mural, extérieur, porte d'entrée, conduit d'air, etc).

Aucune restriction n'est attachée à la manière dont le type du capteur est identifié. Par exemple, le type de capteur peut être indiqué dans un champ d'en-tête du message, sous la forme d'un code de plusieurs bits indiquant un type de capteur parmi un ensemble prédéterminé de types de capteur.

Dans ce cas, le message généré peut prendre la forme d'une trame, comprenant un champ d'en-tête identifiant le type de capteur, et des données utiles représentant les informations captées. La trame peut en outre comprendre un champ final de type CRC (pour « Cyclic Redundancy Check » en anglais) permettant de vérifier la validité des données utiles.

A une étape 22 optionnelle, les données utiles du message peuvent être cryptées, par exemple par une permutation de bits pseudo-aléatoires, ce qui permet avantageusement de sécuriser les échanges entre les capteurs et le gestionnaire d'énergie 10. En variante, les données utiles peuvent être cryptées sur la base du type de capteur (on peut ainsi prévoir qu'une clé de cryptage est associée à un type de capteur donné).

A une étape 23, le message généré et optionnellement crypté peut être transmis au gestionnaire d'énergie, par exemple via le module de communication 13.1 ou 13.2 et le module de communication maître 14.

L'invention permet ainsi de définir un nouveau format de message qui permet avantageusement d'identifier le type de capteur qui a acquis les informations présentes dans les données utiles. Comme détaillé ultérieurement, un tel format de message améliore la fiabilité des données transmises et peut être exploité par le gestionnaire d'énergie afin de générer des consignes de régulation adaptées.

La Figure 3 présente un capteur 30, tel que le premier capteur 11.1 ou le deuxième capteur 11.2, selon un mode de réalisation de l'invention.

Le capteur 30 comprend une unité de détection 31 pour capter des informations dans un environnement du capteur 30. L'unité de détection 31 est ainsi apte à mettre en œuvre l'étape 20 de la figure 2.

En outre, une unité de génération 32 est apte à générer un message selon l'invention, et ainsi à mettre en œuvre l'étape 21 de la figure 2.

Une unité de cryptage optionnelle 33 peut également être prévue dans le capteur 30 en vue de mettre en œuvre l'étape 23 de la figure 2.

Le capteur 30 comprend également une unité de transmission 34 pour transmettre le message généré au gestionnaire d'énergie 10 (par exemple par l'intermédiaire du module de communication 13.1 ou 13.2 et du module de communication maître 14).

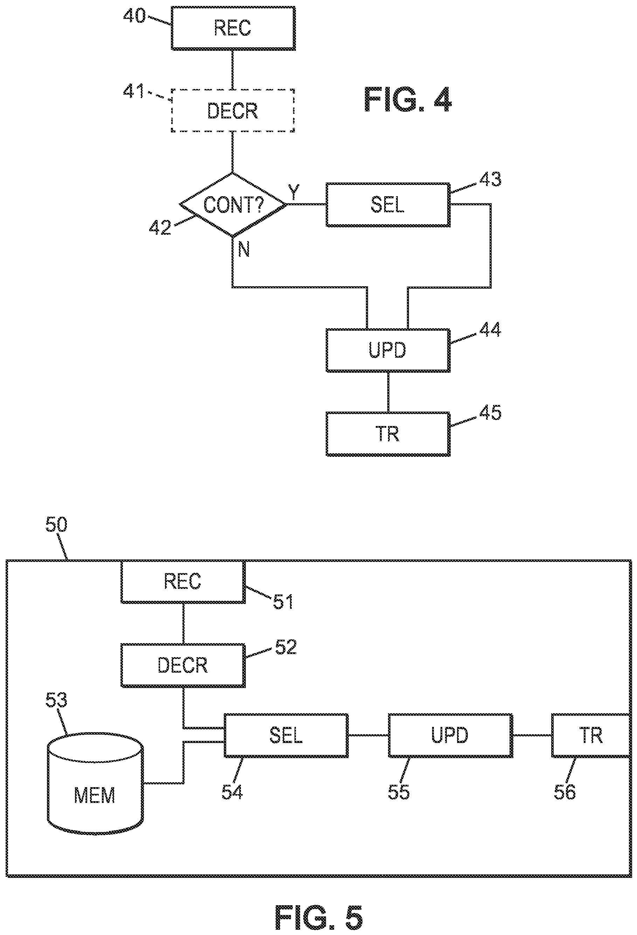

La figure 4 est un diagramme illustrant les étapes d'un procédé de traitement de données selon un mode de réalisation de l'invention.

Le procédé de traitement de données peut être mis en œuvre dans un gestionnaire d'énergie en charge de réguler la consommation électrique d'un ensemble d'équipements électriques au moyen de consignes de régulation, tel que le gestionnaire d'énergie 10 de la figure 1.

A une étape 40, le gestionnaire d'énergie reçoit au moins un message issu d'au moins capteur, le message pouvant être généré et transmis de la manière décrite en référence aux figures 2 et 3. Le message comprend ainsi des informations captées par le capteur et identifie le type de capteur.

Dans la mesure où le message est éventuellement crypté, le procédé de traitement de données peut comprendre une étape 41 de décryptage du message reçu. Dans le cas où le message a été crypté par permutation de bits pseudo-aléatoire, le gestionnaire d'énergie 10 peut disposer d'une graine commune avec le capteur, afin de déduire la même chaîne pseudo-aléatoire. Dans le cas où le message a été crypté à l'aide d'une clé dépendant du type de capteur, le gestionnaire d'énergie a accès à une table mettant en correspondance des clés avec les types de capteur respectifs.

A une étape 42, le gestionnaire d'énergie peut déterminer si une information contradictoire issue d'un autre capteur a été reçue (par exemple dans un intervalle de temps donné précédant l'instant de réception de l'étape 40) ou va être reçu (dans un intervalle de temps donné suivant l'instant de réception de l'étape 40).

Dans le cas où aucune information contradictoire n'a été reçue, le procédé de traitement de données comprend une étape 44 de mise à jour, en fonction de l'information captée et du type de capteur identifié, d'une consigne de régulation.

Dans le cas contraire, une information contradictoire a été reçue. Par exemple, le premier capteur 11.1 a remonté une première information dans un premier message et le deuxième capteur 11.2 a remonté une deuxième information dans un deuxième message, qui contredit la première information (par exemple, la première information est qu'une fenêtre est ouverte tandis que la deuxième information est que la même fenêtre est fermée). Dans ce cas, le procédé de traitement de données peut comprendre une étape 43 de sélection de l'un des messages reçus, sur la base des types de capteur identifiés respectivement dans les premier et deuxième messages. A cet effet, le gestionnaire d'énergie peut stocker un ensemble de règles permettant la sélection d'un message pour chaque combinaison de types de capteurs ayant émis des messages (par exemple, pour une détection d'ouverture de fenêtre, sur réception de messages d'un type de capteur A et d'un type de capteur B, sélection du message transmis par le capteur de type A).

De manière alternative, chaque type de capteur peut être associé dans une table de correspondance à un niveau de qualité donné, pour des informations d'une nature donnée (mesure de température, détection de présence, détection d'ouverture de fenêtre). Dans ce cas, l'étape de sélection 24 peut consister à sélectionner le message issu du capteur dont le type est associé au niveau de qualité le plus élevé.

L'étape 43 est ensuite suivie de l'étape 44 de mise à jour de la consigne de régulation.

A une étape 45, la consigne de régulation est transmise à au moins l'un des équipements électriques 12.1 et 12.2.

Afin d'illustrer les étapes 42 à 44 de la figure 4, plusieurs exemples sont donnés dans ce qui suit.

Selon un premier exemple, le gestionnaire d'énergie mémorise des périodes d'occupation et d'inoccupation d'une pièce donnée du logement de l'utilisateur, afin d'établir, par apprentissage par exemple, un programme de chauffage. Le programme peut comprendre des premières plages horaires pour un chauffage en mode confort par un radiateur (par exemple le premier équipement 12.1) avec un débit de ventilation d'air neuf de 30 m³ par heure d'une unité locale de ventilation (le deuxième équipement 12.2), et des secondes plages horaires pour un chauffage en mode économique par le radiateur 12.1 et avec un débit de ventilation minimum pour l'unité locale de ventilation 12.2. Les premières plages horaires correspondent typiquement aux plages d'occupation par l'utilisateur, tandis que les secondes plages horaires correspondent aux périodes d'absence de l'utilisateur.

Ainsi par défaut, au début de chaque plage horaire, le gestionnaire d'énergie 10 envoie des consignes de régulation respectives au radiateur 12.1 et à l'unité locale de ventilation 12.2.

Dans ce premier exemple, le premier capteur 11.1, compris dans le radiateur, est un capteur de mouvement qui détecte une absence lorsqu'aucun mouvement n'est détecté sur une période donnée, de trente minutes par exemple, tandis que le deuxième capteur 11.2 peut être un capteur de présence/absence murale, apte à détecter la présence ou l'absence d'un utilisateur de manière instantanée.

Afin d'établir une telle programmation, le gestionnaire d'énergie peut privilégier avantageusement les informations instantanées de présence/absence issues du second capteur 11.2 mural, ces informations étant identifiées au moyen du type de capteur identifié dans les messages reçus.

En revanche, une fois le programme établi, le gestionnaire d'énergie 10 peut en outre recevoir des informations du premier capteur 11.1. Si une information d'absence est remontée par le premier capteur 11.2 du radiateur 12.1 durant une première plage horaire (présence théorique de l'utilisateur), le gestionnaire d'énergie peut mettre à jour des consignes de régulation, à l'étape 44, qui sont ensuite transmises à l'étape 45 afin d'ordonner au radiateur 12.1 de passer en mode économique, et d'ordonner à l'unité de ventilation de passer à un débit de ventilation minimum.

Ainsi, l'invention permet d'optimiser la consommation d'équipements électriques d'un logement.

Selon un deuxième exemple, le premier capteur 11.1 est un capteur de température d'un radiateur (premier équipement électrique 12.1) et le deuxième capteur 11.2 est un contact de feuillure apte à détecter instantanément l'ouverture d'une fenêtre. Comme précédemment détaillé, le premier capteur 11.1 peut ainsi détecter une ouverture de fenêtre en mesurant une chute de température sur une période donnée, par exemple une période de cinq minutes. Dans ce deuxième exemple, le deuxième équipement électrique 12.2 peut être une unité locale de ventilation.

Dans le cas où le contact de feuillure 11.2 ne détecte pas d'ouverture de fenêtre mais que le premier capteur 11.1 détecte une ouverture de la même fenêtre, le gestionnaire d'énergie, sur réception du message issu du premier capteur 11.1 peut mettre à jour une consigne de régulation afin de commander un passage du radiateur 12.1 en mode arrêt, tandis que la consigne de régulation de l'unité locale de ventilation 12.2 est maintenue afin qu'elle continue à fonctionner. Le gestionnaire d'énergie 10 peut en outre, de manière complémentaire, générer une alerte, afin de signaler que le contact de feuillure 11.2 est vraisemblablement défaillant. Si le contact de feuillure 11.2 et le premier capteur de température 11.1 détectent tous les deux une ouverture de fenêtre, le gestionnaire d'énergie 10 peut mettre à jour deux consignes de régulation afin de commander l'arrêt du radiateur 12.1 et l'arrêt de l'unité de ventilation 12.2.

Selon un troisième exemple, le gestionnaire d'énergie 10 peut recevoir des informations relatives à des mesures de température issues de plusieurs capteurs distincts, par exemple, un capteur de température d'une unité de ventilation, un capteur de température mural et un capteur de température d'un radiateur.

Par exemple, une première valeur de température est reçue du capteur de température de l'unité de ventilation, une deuxième valeur de température est reçue du capteur de température mural, et une troisième valeur de température est reçue du capteur de température du radiateur. Dans ce cas, la valeur moyenne des première, deuxième et troisièmes valeurs de température peut être utilisée pour mettre à jour une consigne de régulation (augmenter ou diminuer le débit de ventilation de l'unité de ventilation, et/ou augmenter ou diminuer le niveau de chauffage du radiateur).

En outre, des coefficients de pondération associés à chaque type de capteur peuvent être considérés. A cet effet, le gestionnaire d'énergie peut stocker une table mettant en correspondant les types de capteur (qui peuvent être identifiés dans les messages reçus) avec des coefficients de pondération respectifs.

Par exemple, le coefficient de pondération associé à un capteur d'une unité de ventilation peut être lié au débit de ventilation. Si le débit est nul, le coefficient peut être égal à 0, et si le débit est non nul, le coefficient peut être égal à une valeur α prédéterminée.

Le coefficient de pondération associé à un capteur d'un radiateur peut être lié à son régime de fonctionnement. Si le radiateur est en régime de régulation stabilisé, le coefficient de pondération peut être égal à une valeur β prédéterminée, et sinon le coefficient de pondération est nul.

Le coefficient de pondération du capteur mural peut être fixe et égal à une valeur γ prédéterminée.

La valeur de la température moyennée est alors obtenue en pondérant les première, deuxième et troisième valeurs de température.

Un tel exemple s'applique également lorsque deux valeurs de température sont reçues, ou lorsque plus de trois valeurs de température sont reçues.

La figure 5 présente un gestionnaire d'énergie 50 selon un mode de réalisation de l'invention, tel que le gestionnaire d'énergie 10 de la figure 1.

Le gestionnaire d'énergie 50 comprend une unité de réception 51 apte à recevoir des messages issus de capteurs, et ainsi à mettre en œuvre l'étape 40 du procédé de la figure 4. A cet effet, l'unité de réception 51 peut être reliée au module de communication maître 14.

Une unité de décryptage 52 est en outre apte à décrypter le message reçu, lorsque ce dernier est crypté, et à mettre en œuvre l'étape 41 du procédé illustré sur la figure 4.

Une unité de sélection 54 est en outre apte à mettre en œuvre l'étape 42 illustrée sur la figure 4.

Le gestionnaire d'énergie 50 peut en outre comprendre une mémoire 53, apte à stocker un ensemble de règles tenant compte des types de capteur, afin de mettre en œuvre la sélection par l'unité de sélection 54, comme précédemment détaillé. En variante, la mémoire 53 peut stocker une table mettant en correspondance, pour une information d'une nature donnée, des types de capteurs avec des niveaux de qualité respectifs. La mémoire 53 peut en outre stocker les coefficients de pondération en association avec les différents types de capteur.

Une unité de mise à jour 55 est apte à mettre en œuvre l'étape 44 du procédé de traitement de données illustré sur la figure 4, afin de mettre à jour une consigne de régulation.

Le gestionnaire d'énergie 50 comprend enfin une unité de transmission 56 apte à transmettre la consigne de régulation mise à jour à au moins un équipement électrique, par exemple par l'intermédiaire d'un fil pilote bidirectionnel.

## Revendications

1. Procédé de traitement de données, mis en œuvre dans un gestionnaire d'énergie (10, 50) en charge de réguler la consommation électrique d'un ensemble d'équipements électriques (12.1, 12.2) au moyen de consignes de régulation, ledit procédé comprenant les étapes suivantes:
- réception d'au moins un message issu d'au moins un capteur (11.1, 11.2), ledit message comprenant une information captée par ledit capteur et ledit message identifiant un type dudit capteur ;
- mise à jour, en fonction de l'information captée et du type de capteur identifié, d'une consigne de régulation ;
- transmission de ladite consigne de régulation mise à jour à au moins un équipement électrique de l'ensemble d'équipements électriques ;
**caractérisé en ce que**, sur réception d'un premier message et d'un deuxième message issus respectivement d'un premier capteur (11.1) et d'un deuxième capteur (11.2), comprenant des informations captées contradictoires, le procédé comprend en outre la sélection de l'un des messages sur la base du type du premier capteur et du type du deuxième capteur, la consigne de régulation étant mise à jour en fonction de l'information captée par le capteur sélectionné.

2. Procédé selon la revendication 1, dans lequel le gestionnaire d'énergie (10, 50) stocke en correspondance des types de capteurs avec des niveaux de qualités respectifs, et dans lequel, en cas de réception d'informations contradictoires, le message sélectionné est le message identifiant le type de capteur associé au niveau de qualité de plus élevé.

3. Procédé selon l'une des revendications précédentes, dans lequel l'information captée par le capteur (11.1, 11.2) est une mesure de température.

4. Procédé selon les revendications 1 et 3, dans lequel le gestionnaire d'énergie (10, 50) stocke en correspondance des types de capteurs avec des coefficients de pondération respectifs, dans lequel un premier message issu d'un premier capteur (11.1) est reçu, ledit premier message comprenant une première valeur de température captée par ledit premier capteur et ledit premier message identifiant un type dudit premier capteur,
dans lequel au moins un deuxième message issu d'un deuxième capteur (11.2) est en outre reçu, ledit deuxième message comprenant une deuxième valeur de température captée par le deuxième capteur et ledit deuxième message comprenant identifiant un type dudit deuxième capteur,
dans lequel la consigne de régulation est mise à jour en fonction d'une pondération des premières et deuxième valeurs de température par les coefficients de pondération respectivement associés aux types des premier et deuxième capteurs.

5. Procédé selon l'une des revendications précédentes, dans lequel l'information captée par le capteur (11.1, 11.2) est information de détection de présence d'un utilisateur.

6. Procédé selon l'une des revendications précédentes, dans lequel le message comprend un champ d'en-tête, ledit champ d'en-tête identifiant ledit type de capteur.

7. Procédé selon la revendication 6, dans lequel l'information captée par le capteur (11.1, 11.2) est cryptée dans le message en fonction du type de capteur, ledit procédé comprenant en outre une étape de décryptage par le gestionnaire d'énergie du message reçu à partir du type de capteur identifié dans le champ d'en-tête.

8. Programme d'ordinateur comportant des instructions pour la mise en œuvre du procédé selon l'une des revendications 1 à 7, lorsque ce programme est exécuté par un processeur.

9. Gestionnaire d'énergie en charge de réguler la consommation électrique d'un ensemble d'équipements électriques au moyen de consignes de régulation, ledit gestionnaire d'énergie comprenant :
- une unité de réception (51) d'au moins un message issu d'un capteur, ledit message comprenant une information captée par ledit capteur et ledit message identifiant un type dudit capteur ;
- une unité de mise à jour (55), en fonction de l'information captée et du type de capteur identifié, d'une consigne de régulation ;
- une unité de transmission (56) de ladite consigne de régulation mise à jour à au moins un équipement électrique de l'ensemble d'équipements électriques;
**caractérisé en ce que** le gestionnaire comprend en outre:
- une unité de sélection (54) pour, sur réception d'un premier message et d'un deuxième message issus respectivement d'un premier capteur (11.1) et d'un deuxième capteur (11.2), comprenant des informations captées contradictoires, sélectionner l'un des messages sur la base du type du premier capteur et du type du deuxième capteur, la consigne de régulation étant mise à jour en fonction de l'information captée par le capteur sélectionné.

10. Système de régulation de la consommation électrique d'un ensemble d'équipements électriques (12.1, 12.2) comprenant un gestionnaire d'énergie (10, 50) selon la revendication 9 et au moins un capteur (11.1, 11.2) apte à communiquer avec le gestionnaire d'énergie (10, 50) en charge de la régulation de la consommation électrique d'un ensemble d'équipements électriques (12.1, 12.2), ledit capteur (11.1, 11.2) comprenant :
- une unité de détection (31) pour capter des informations dans un environnement dudit capteur ;
- une unité de génération (32) d'un message comprenant lesdites informations et identifiant le type de capteur ;
- une unité transmission (34) dudit message au gestionnaire d'énergie..

## Patentansprüche

1. Verfahren zum Verarbeiten von Daten, welches in einem Energieverwalter (10, 50) durchgeführt wird, welcher zuständig ist, den elektrischen Verbrauch von einer Gruppe elektrischer Geräte (12.1, 12.2) mittels Steueranweisungen zu steuern, wobei das besagte Verfahren die folgenden Schritte aufweist:
- Empfangen von mindestens einer Nachricht, welche von mindestens einem Sensor (11.1, 11.2) stammt, wobei die besagte Nachricht eine mittels des besagten Sensors erfasste Information aufweist und die besagte Nachricht einen Typ des besagten Sensors identifiziert,
- Aktualisieren, in Abhängigkeit von der erfassten Information und des identifizierten Sensortyps, von einer Steueranweisung,
- Übertragen der besagten aktualisierten Steueranweisung zu mindestens einem elektrischen Gerät der Gruppe elektrischer Geräte,
**dadurch gekennzeichnet, dass**
nach dem Empfangen einer ersten Nachricht und einer zweiten Nachricht, welche in zugeordneter Weise von einem ersten Sensor (11.1) und von einem zweiten Sensor (11.2) stammen, welche widersprüchliche erfasste Informationen aufweisen, das Verfahren ferner aufweist das Auswählen von einer der Nachrichten auf der Basis des Typs des ersten Sensors und des Typs des zweiten Sensors, wobei die Steueranweisung in Abhängigkeit von der mittels des ausgewählten Sensors erfassten Information aktualisiert wird.

2. Verfahren gemäß Anspruch 1, wobei der Energieverwalter (10, 50) Typen von Sensoren in Übereinstimmung mit jeweiligen Qualitätsniveaus speichert, und wobei für den Fall des Empfangens von widersprüchlichen Informationen die ausgewählte Nachricht die Nachricht ist, welche den Sensortyp identifiziert, welcher dem höchsten Qualitätsniveau zugeordnet ist.

3. Verfahren gemäß einem der vorherigen Ansprüche, wobei die mittels des Sensors (11.1, 11.2) erfasste Information eine Temperaturmessung ist.

4. Verfahren gemäß den Ansprüchen 1 und 3, wobei der Energieverwalter (10, 50) Typen von Sensoren in Übereinstimmung mit jeweiligen Gewichtungskoeffizienten speichert, wobei eine erste Nachricht, welche von einem ersten Sensor (11.1) stammt, empfangen wird, wobei die besagte erste Nachricht einen ersten Temperaturwert aufweist, welcher mittels des besagten ersten Sensors erfasst wird, und die besagte erste Nachricht einen Typ des besagten ersten Sensors identifiziert,
wobei mindestens eine zweite Nachricht, welche von einem zweiten Sensor (11.2) stammt, ferner empfangen wird, wobei die besagte zweite Nachricht einen zweiten Temperaturwert aufweist, welcher mittels des zweiten Sensors erfasst wird, und die besagte zweite Nachricht einen Identifikator eines Typs des besagten zweiten Sensors aufweist,
wobei die Steueranweisung aktualisiert wird in Abhängigkeit von einer Gewichtung des ersten und des zweiten Temperaturwerts mittels der Gewichtungskoeffizienten, welche jeweilig den Typen des ersten und des zweiten Sensors zugeordnet sind.

5. Verfahren gemäß einem der vorherigen Ansprüche, wobei die mittels des Sensors (11.1, 11.2) erfasste Information eine Information des Detektierens der Anwesenheit eines Nutzers ist.

6. Verfahren gemäß einem der vorherigen Ansprüche, wobei die Nachricht ein Kopf-Feld aufweist, wobei das besagte Kopf-Feld den besagten Sensortyp identifiziert.

7. Verfahren gemäß Anspruch 6, wobei die mittels des Sensors (11.1, 11.2) erfasste Information in der Nachricht verschlüsselt wird in Abhängigkeit von dem Sensortyp, wobei das besagte Verfahren ferner aufweist einen Schritt des Entschlüsselns, mittels des Energieverwalters, der empfangenen Nachricht ausgehend von dem in dem Kopf-Feld identifizierten Sensortyp.

8. Computerprogramm, welches Anweisungen für das Durchführen des Verfahrens gemäß einem der Ansprüche 1 bis 7 aufweist, wenn dieses Programm mittels eines Prozessors ausgeführt wird.

9. Energieverwalter, welcher zuständig ist, den elektrischen Verbrauch von einer Gruppe elektrischer Geräte mittels Steueranweisungen zu steuern, wobei der besagte Energieverwalter aufweist:
- eine Einheit zum Empfangen (51) von mindestens einer Nachricht, welche von einem Sensor stammt, wobei die besagte Nachricht eine mittels des besagten Sensors erfasste Information aufweist und die besagte Nachricht einen Typ des besagten Sensors identifiziert,
- eine Einheit zum Aktualisieren (55), in Abhängigkeit von der erfassten Information und von dem identifizierten Sensortyp, von einer Steueranweisung,
- eine Einheit zum Übertragen (56) der besagten aktualisierten Steueranweisung zu mindestens einem elektrischen Gerät der Gruppe elektrischer Geräte,
**dadurch gekennzeichnet, dass** der Verwalter ferner aufweist:
- eine Einheit zum Auswählen (54), um, nach dem Empfangen von einer ersten Nachricht und von einer zweiten Nachricht, welche in zugeordneter Weise von einem ersten Sensor (11.1) und von einem zweiten Sensor (11.2) stammen, welche widersprüchliche erfasste Informationen aufweisen, eine der Nachrichten auszuwählen auf der Basis des Typs des ersten Sensors und des Typs des zweiten Sensors, wobei die Steueranweisung aktualisiert wird in Abhängigkeit von der mittels des ausgewählten Sensors erfassten Information.

10. System zum Steuern des elektrischen Verbrauchs von einer Gruppe elektrischer Geräte (12.1, 12.2), welches aufweist einen Energieverwalter (10, 50) gemäß Anspruch 9 und mindestens einen Sensor (11.1, 11.2), welcher imstande ist, mit dem Energieverwalter (10, 50) zu kommunizieren, welcher für das Steuern des elektrischen Verbrauchs von einer Gruppe elektrischer Geräte (12.1, 12.2) zuständig ist, wobei der besagte Sensor (11.1, 11.2) aufweist:
- eine Einheit zum Detektieren (31), um Informationen in einer Umgebung des besagten Sensors zu erfassen,
- eine Einheit zum Erzeugen (32) von einer Nachricht, welche die besagten Informationen aufweist und den Sensortyp identifiziert,
- eine Einheit zum Übertragen (34) der besagten Nachricht zu dem Energieverwalter.

## Claims

1. A data processing method, implemented in an energy manager (10, 50) responsible for regulating the electricity consumption of a set of electrical equipment (12.1, 12.2) using regulating setpoints, said method comprising the following steps:
- receiving at least one message coming from at least one sensor (11.1, 11.2), said message comprising a piece of information detected by said sensor and said message identifying a type of said sensor;
- updating a regulating setpoint as a function of the detected information and the identified sensor type;
- transmitting said updated regulating setpoint to at least one piece of electrical equipment of the set of electrical equipment;
**characterized in that**,
upon receiving a first message and a second message respectively coming from a first sensor (11.1) and a second sensor (11.2), comprising contradictory detected information, the method further comprises selecting one of the messages based on the type of the first sensor and the type of the second sensor, the regulating setpoint being updated as a function of the information detected by the selected sensor.

2. The method according to claim 1, wherein the energy manager (10, 50) stores sensor types with corresponding respective quality levels, and wherein, in case of reception of contradictory information, the selected message is the message identifying the type of sensor associated with the highest quality level.

3. The method according to one of the preceding claims, wherein the information detected by the sensor (11.1, 11.2) is a temperature measurement.

4. The method according to claims 1 and 3, wherein the energy manager (10, 50) stores sensor types with corresponding respective weight coefficients, wherein a first message coming from a first sensor (11.1) is received, said first message comprising a first temperature value detected by said first sensor and said first message identifying a type of said first sensor, wherein at least one second message coming from a second sensor (11.2) is further received, said second message comprising a second temperature value detected by the second sensor and said second message comprising an identifier of a type of said second sensor,
wherein the regulating setpoint is updated as a function of a weight of the first and second temperature values by the weight coefficients respectively associated with the types of the first and second sensors.

5. The method according to one of the preceding claims, wherein the information detected by the sensor (11.1, 11.2) is presence detection information of a user.

6. The method according to one of the preceding claims, wherein the message comprises a header field, said header field identifying said sensor type.

7. The method according to claim 6, wherein the information detected by the sensor (11.1, 11.2) is encrypted in the message as a function of the sensor type, said method further comprising a step for decryption by the energy manager of the received message from the type of sensor identified in the header field.

8. A computer program including instructions for implementing the method according to one of claims 1 to 7, when this program is executed by a processor.

9. An energy manager responsible for regulating the electricity consumption of a set of electrical equipment using regulating setpoints, said energy manager comprising:
- a reception unit (51) for at least one message coming from a sensor, said message comprising a piece of information detected by said sensor and said message identifying a type of said sensor;
- a unit for updating (55), as a function of the detected information and the type of sensor identified, a regulating setpoint;
- a unit for transmitting (56) said updated regulating setpoint to at least one piece of electrical equipment from the set of electrical equipment;
**characterized in that** the manager further comprises:
- a selection unit (54) for, upon receiving a first message and a second message respectively coming from a first sensor (11.1) and a second sensor (11.2), comprising contradictory detected information, selecting one of the messages based on the type of the first sensor and the type of the second sensor, the regulating setpoint being updated as a function of the information detected by the selected sensor.

10. A system for regulating the electricity consumption of a set of electrical equipment (12.1, 12.2) comprising an energy manager (10, 50) according to claim 9 and at least one sensor (11.1, 11.2) capable of communicating with the energy manager (10, 50) responsible for regulating the electricity consumption of a set of electrical equipment (12.1, 12.2), said sensor (11.1, 11.2) comprising:
- a detection unit (31) for detecting information in an environment of said sensor;
- a unit for generating (32) a message comprising said information and identifying the type of sensor;
- a unit for transmitting (34) said message to the energy manager.
